# EUROPÄISCHE PATENTSCHRIFT

(11) **EP 0 464 412 B1**
(45) Veröffentlichungstag und Bekanntmachung des Hinweises auf die Patenterteilung: **03.03.1993**
(21) Anmeldenummer: 91109585.9
(22) Anmeldetag: 11.06.1991
(51) Int. Cl.: B60G 3/14, B60G 21/055, B60G 7/02, B60G 11/27

(54) **Luftgefederte Kurbelachse**
Pneumatical suspension with longitudinal arms
Suspension pneumatique à bras longitudinaux

(30) Priorität: 04.07.1990 DE 4021059
(43) Veröffentlichungstag der Anmeldung: 08.01.1992
(73) Patentinhaber: Bergische Achsenfabrik Fr. Kotz & Söhne, 51674 Wiehl (DE)
(72) Erfinder: Kopplow, Hans-Werner, Dipl.-Ing., W-5223 Nümbrecht (DE); Thiel, Klaus-Hermann, Dipl.-Ing., W-5220 Waldbröl (DE); Steiner, Helmut, W-5276 Wiehl (DE)
(74) Vertreter: Stenger, Watzke & Ring Patentanwälte

(56) Entgegenhaltungen:
- FR-A- 2 079 967
- GB-A- 426 703
- US-A- 2 597 122
- US-A- 3 822 908
- US-A- 4 248 455
- US-A- 4 763 953

## Beschreibung

Die Erfindung betrifft eine luftgefederte Kurbelachse für Kraftfahrzeuge und Anhänger mit in an Längsträgern des Fahrzeugrahmens angeordneten Achsführungsrohren verschwenkbar gelagerten Längslenkern, an denen ein die Radnabe und Bremse tragender Achsstummel angeordnet ist und die jeweils durch mindestens eine Luftfeder gegenüber dem Fahrzeugrahmen abgestützt sind, wobei die Längslenker unabhängig voneinander verschwenkbar im jeweiligen Achsführungsrohr gelagert und die Luftfederbälge der Luftfedern gemeinsam zum Absenken des Fahrzeugrahmens entlüftbar sind, die Luftfedern zwischen den Längsträgern des Fahrzeugrahmens angeordnet und mit einer Konsole jeweils an einem Tragarm abgestützt sind, der verdrehbar im jeweiligen Achsführungsrohr gelagert und unverdrehbar mit dem zugehörigen Längslenker verbunden ist.

Eine gattungsgemäße luftgefederte Kurbelachse ist aus der US-A 3,822,908 bekannt. Bei der aus dieser Druckschrift vorbekannten luftgefederten Kurbelachse ist ein Achsführungsrohr am Fahrzeugrahmen befestigt. In diesem Achsführungsrohr sind zwei Längslenker verschwenkbar gelagert, an denen ein die Radnabe tragender Achsstummel angeordnet ist. Die Längslenker sind durch eine Luftfeder gegenüber dem Fahrzeugrahmen abgestützt, wobei die Längslenker unabhängig voneinander verschwenkbar im Achsführungsrohr gelagert und die Luftfederbälge der Luftfedern gemeinsam zum Absenken des Fahrzeugrahmens entlüftbar sind. Darüber hinaus sind die Luftfedern zwischen den Längsträgern des Fahrzeugrahmens angeordnet und mit einer Konsole jeweils an einem Tragarm abgestützt, der verdrehbar im Achsführungsrohr gelagert und unverdrehbar mit dem zugehörigen Längslenker verbunden ist. Hierzu sind Länglenker und Tragarm gemeinsam unmittelbar an einer im Achsführungsrohr geführten Achse befestigt. Zwischen dieser Achse und dem Achsführungsrohr ist ein Lagerelement, beispielsweise ein Gummilager, angeordnet. Bei dieser vorbekannten Kurberlachse sind demnach die Tragarme an den als Halbachsen ausgebildeten Achsen befestigt, welche lediglich mittels eines einfachen Lagerelementes im Achsführungsrohr geführt sind.

Ausgehend von diesem Stand der Technik liegt der Erfindung die **Aufgabe** zugrunde, eine luftgefederte Kurbelachse zu schaffen, die ein geringes Einbauvolumen beansprucht und ein tiefes Absenken des Fahrzeugrahmens ermöglicht, wobei eine einfache drehfeste Verbindung zwischen Tragarm und Längslenker mit einer möglichst reibungsarmen Verdrehung in dem fest eingespannten Achsführungsrohr geschaffen wird, die zusätzlich die Biegebeanspruchung der einzeln angelenkten Radaufhängungen aufnimmt.

Die **Lösung** dieser Aufgabenstellung sieht vor, daß jeder Tragarm über Lagerhülsen mit dem zugehörigen Längslenker verbunden ist, daß die jeweiligen Lagerhülsen mit im Achsführungsrohr gelagerten Innenrohren verbunden sind, daß die Innenrohre die jeweiligen Lägerhülsen zur Mitte des Fahrzeugrahmens überragen, und daß auf den dadurch gebildeten Endstücken der Innenrohre ein Verbindungsrohr frei drehbar gelagert ist.

Eine erfindungsgemäße gestaltete Kurbelachse weist die Vorteile einzeln aufgehängter Räder in Verbindung mit einer Luftfederung auf, wobei der Rahmen des Fahrzeuges durch Be- oder Entlüften der Lüftungsbälge angehoben bzw. abgesenkt werden kann. Die Lagerhülse des die Luftfeder abstützenden Tragarmes ist mit einem im Achsführungsrohr gelagerten Innenrohr verbunden, so daß sich eine einfache drehfeste Verbindung zwischen dem Tragarm und dem Längslenker ergibt. Schließlich ist bei der erfindungsgemäßen Kurbelachse vorgesehen, daß die Innenrohre die jeweilige Lagerhülse zur Mitte des Fahrzeugrahmens überragen und daß auf diesen Endstücken der Innenrohre ein Verbindungsrohr frei drehbar gelagert ist. Dieses Verbindungsrohr nimmt in vorteilhafter Weise die Biegebeanspruchung der einzeln angelenkten Radaufhängungen auf, so daß auf weitere Konstruktionselemente zur Stützung der Achsführungsrohre der einzelnen Radaufhängung verzichtet werden kann. Das Verbindungsrohr dient der Fixierung von Tragarm und Längslenker in Achslängsrichtung und relativ zum Achsführungsrohr, d.h. zum Fahrzeugrahmen.

Bei einer vorteilhaften Weiterbildung der erfindungsgemäß gestalteten Kurbelachse ist vorgesehen, daß zwischen dem Achsführungsrohr und dem Innenrohr vorzugsweise Lagerbuchsen angeordnet sind, die eine möglichst reibungsarme Verdrehung des Innenrohres in dem fest eingespannten Achsführungsrohr ermöglichen.

Bei einer vorteilhaften Weiterentwicklung der erfindungsgemäßen Kurberlachse ist vorgesehen, daß die Lagerhülsen jedes Tragarmes über mindestens einen Verbindungsstab formschlüssig mit einem am Längslenker angeordneten Lagerstück verbunden ist. Hierbei ist nach einem weiteren Merkmal der Erfindung besonders vorteilhaft, daß mindestens ein Verbindungsstab zur Verbindung der beiden Radaufhängungen durchgehend als Stabilisator ausgebildet ist. Dieser Verbindungsstab dient zum einen der Spurweitenfixierung und zum anderen der Stabilisierung der Fahreigenschaften des Fahrzeuges. Durch diesen Stabilisator werden Bewegungen des Fahrzeuges um seine Längsachse reduziert, die beim Überfahren einseitiger Fahrbahnunbebenheiten entstehen.

Zur Fixierung der Tragarme für die Luftfedern und der Längslenker ist vorzugsweise vorgesehen, daß die Lagerhülsen und Lagerstücke jeweils über eine Madenschraube in Achslängsrichtung mit dem durchgehenden Verbindungsstab verbunden sind. Mit diesen Madenschrauben wird eine Bewegung der Lagerhülsen und Lagertücke in Achslängsrichtung während des Fahrbetriebes verhindert. Ferner können durch diese Ausgestaltung die Bauelemente zueinander justiert werden.

Zur Dämpfung der beim Fahrbetrieb entstehenden Schwingungen des Fahrzeugaufbaus ist vorzugsweise zwischen der Radaufhängung und dem Fahrzeugrahmen ein Schwingungsdämpfer angeordnet.

Es ist ferner bei einer bevorzugten Ausführungsform vorgesehen, daß die Luftfedern mit einer zum Heben und Senken abschaltbaren Niveauregelung ausgerüstet und als Sensor zur lastabhängigen Bremsansteuerung ausgebildet sind.

Weitere Einzelheiten und Vorteile ergeben sich aus der nachfolgenden Beschreibung der zugehörigen Zeichnung, in welcher eine bevorzugte Ausführungsform einer erfindungsgemäß ausgebildeten luftgefederten Kurbelachse dargestellt ist. In der Zeichnung zeigen:
Fig. 1 eine an die Unterseite der Längsträger eines Fahrzeugrahmens angeschraubte Kurgberlachse in einer waagerechten geschnittenen Ansicht;
Fig. 2 eine luftgefederte Kurbelachse in angehobener Stellung in einer geschnittenen Ansicht entlang der Linie II-II in Fig. 1;
Fig. 3 die luftgefederte Kurbelachse gemäß Fig. 2 in einer geschnittenen Ansicht entlang der Linie III-III in Fig. 1;
Fig. 4 die luftgefederte Kurbelachse gemäß Fig. 2 in einer abgesenkten Position;
Fig. 5 die luftgefederte Kurbelachse gemäß Fig. 3 in einer abgesenkten Position;
Fig. 6 ein Kraftfahrzeug mit einer luftgefederten Kurbelachse in Fahrstellung in Seitenansicht;
Fig. 7 das Kraftfahrzeug gemäß Fig. 6 mit abgesenktem Rahmen in Seitenansicht;
Fig. 8 das Fahrzeug gemäß Fig. 6 in einer teilweise geschnitten dargestellten Seitenansicht;
Fig. 9 das Kraftfahrzeug gemäß Fig. 7 in einer teilweise geschnitten dargestellten Seitenansicht;
Fig. 10 das Kraftfahrzeug gemäß den Figuren 6 und 8 in einer teilweise geschnitten dargestellten Seitenansicht entlang der Linie III-III in Fig. 1;
Fig. 11 das Kraftfahrzeug gemäß Fig. 7 und 9 in einer teilweise geschnitten dargestellten Seitenansicht entlang der Linie III-III der Fig. 1;
Fig. 12 einen Anhänger mit einer als Zentralachse ausgebildeten Kurbelachse in Fahrstellung;
Fig. 13 den Anhänger gemäß Fig. 12 in abgesenkter Stellung;
Fig. 14 den Anhänger gemäß Fig. 12 in einer teilweise geschnittenen Seitenansicht;
Fig. 15 den Anhänger gemäß Fig. 13 in einer teilweise geschnitten dargestellten Seitenansicht;
Fig. 16 den Anhänger gemäß den Fig. 12 und 14 in einer teilweise geschnittenen Seitenansicht entlang der Linie III-III der Fig. 1;
Fig. 17 den Anhänger gemäß den Fig. 13 und 15 in einer teilweise geschnitten dargestellten Seitenansicht entlang der Linie III-III der Fig. 1;
Fig. 18 einen Anhänger mit einem zentral angeordneten Doppelachsaggregat in Fahrstellung in einer Seitenansicht;
Fig. 19 den Anhänger gemäß Fig. 18 in abgesenkter Stellung;
Fig. 20 den Anhänger gemäß Fig. 18 in einer teilweise geschnitten dargestellten Seitenansicht;
Fig. 21 den Anhänger gemäß Fig. 19 in einer teilweise geschnitten dargestellten Seitenansicht;
Fig. 22 den Anhänger gemäß den Fig. 18 und 20 in einer teilweise geschnitten dargestellten Seitenansicht entlang der Linie III-III der Fig. und
Fig. 23 den Anhänger gemäß den Fig. 19 und 21 in einer teilweise geschnitten dargestellten Seitenansicht entlang der Linie III-III der Fig. 1.

Beim dargestellten Ausführungsbeispiel ist die Kurbelachse am Fahrzeugrahmen angeschraubt, wobei von diesem Fahrzeugrahmen Teile der beiden Längsträger 1 und ein Querträger 2 zu erkennen sind. Mittels einer Tragkonsole 3 ist an jedem Längsträger ein Achsführungsrohr 4 befestigt, das zur Lagerung jeweils einer Radaufhängung dient.

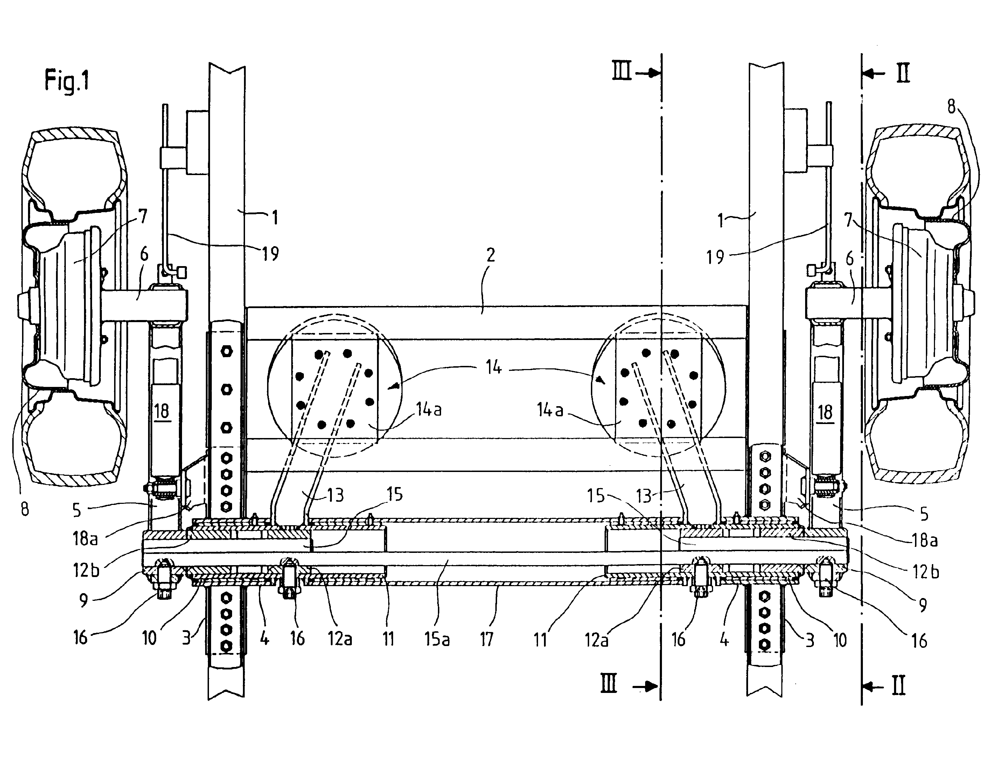

Wie insbesondere aus Fig. 1 hervorgeht, umfaßt jede Radaufhängung einen Längslenker 5, an dessen einem Ende ein Achsstummel 6 befestigt ist, der über eine mit einer Bremsvorrichtung versehenen Nabe ein Rad 8 trägt. Das andere Ende des Längslenkers 5 ist mit einem Lagerstück 9 versehen.

Im Achsführungsrohr 4 ist über Lagerbuchsen 10 ein Innenrohr 11 drehbar gelagert, in dem zwei Lagerhülsen 12a und 12b befestigt sind. Im Bereich der Lagerhülse 12a ist an das Innenrohr 11 ein Tragarm 13 angeschweißt, der zur Abstützung einer Luftfeder 14 dient.

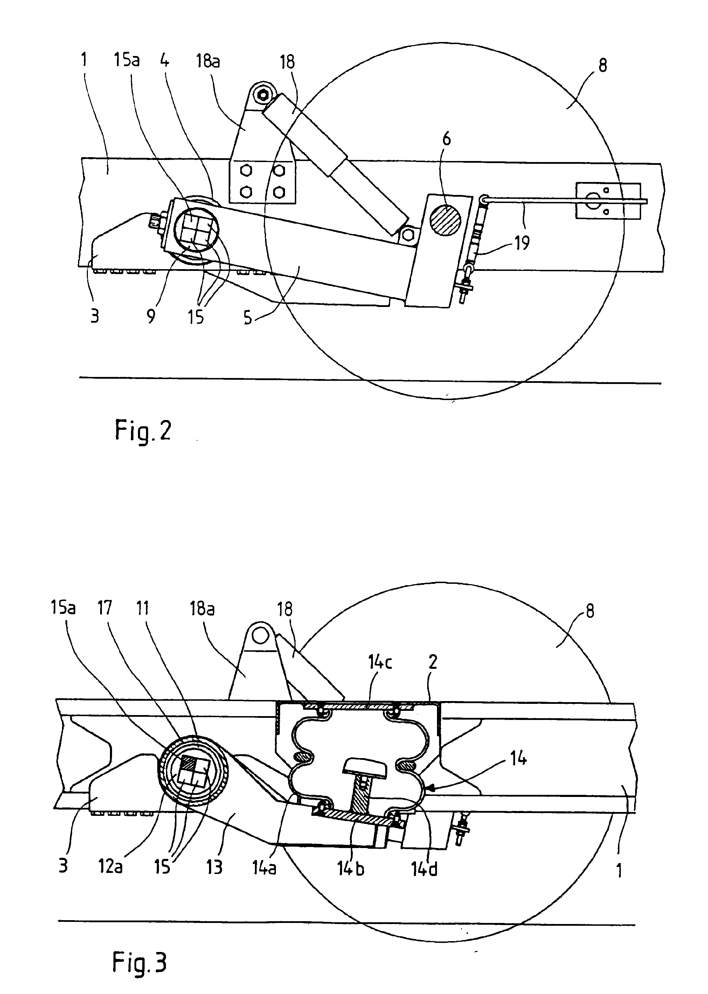

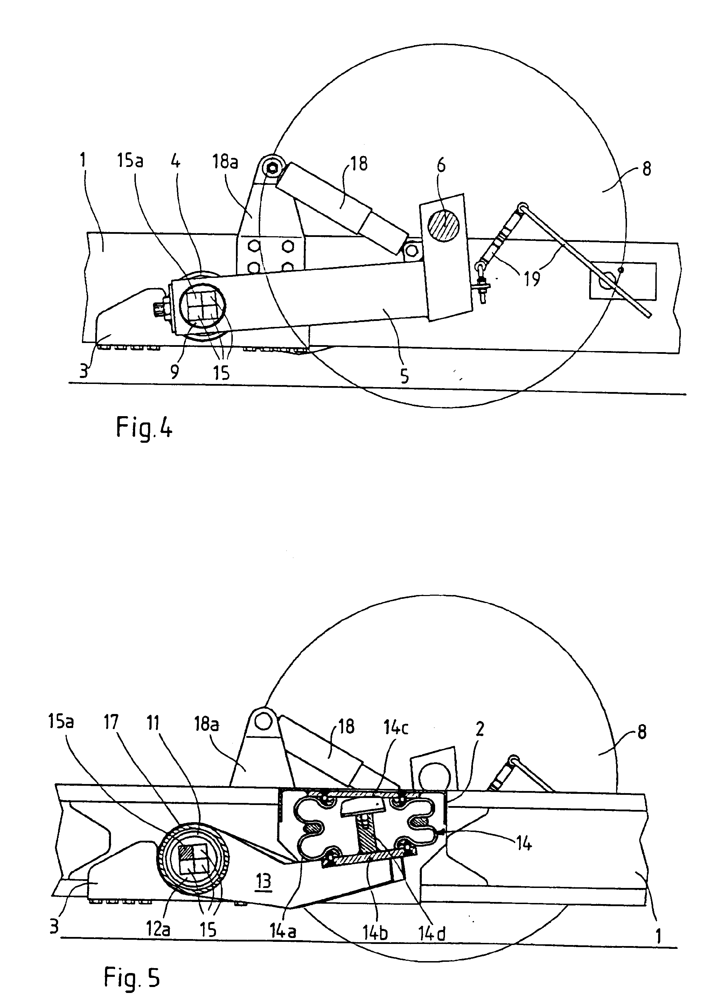

Wie am besten in Fig. 3 zu erkennen ist, umfaßt diese Luftfeder 14 einen Luftfederbalg 14a, der über eine untere Konsole 14b am Tragarm 13 und über eine obere Konsole 14c am Querträger 2 des Fahrzeugrahmens befestigt ist. Im Inneren des Luftfederbalges 14a ist außerdem eine Federstütze 14d angeordnet, die einerseits als Überlastsicherung und andererseits als Anlage der oberen Konsole 14c in der abgesenkten Stellung gemäß Fig. 5 dient.

Die verschwenkbare Lagerung des Längslenkers 5 erfolgt beim Ausführungsbeispiel durch vier Verbindungsstäbe 15, 15a, die formschlüssig einerseits in das am Längslenker 5 befestigte Lagerstück 9 und andererseits in die Lagerhülsen 12a und 12b eingreifen. Auf diese Weise ist jeder Längslenker 5 starr mit dem zugehörigen Tragarm 13 und dem zugehörigen Innenrohr 11 verbunden, das seinerseits verdrehbar im jeweiligen Achsführungsrohr 4 gelagert ist. Eine Fixierung des Lagerstückes 9 und der Lagerhülse 12a und damit des Innenrohres 11 in Achslängsrichtung erfolgt durch Madenschrauben 16, die durch das Lagerstück 9 bzw. die Lagerhülse 12a hindurch in mindestens einen der Verbindungsstäbe 15 bzw. 15a eingreifen und auf diese Weise verhindern, daß die Achsaufhängung seitlich aus dem Achsführungsrohr 4 heraus rutschen kann.

Wie besonders deutlich aus Fig. 1 hervorgeht, werden die in die Räder 8 eingeleiteten Kräfte über die Längslenker 5 außermittig in die verdrehbaren Lageelemente der Radaufhängung eingeleitet. Die Achsführungsrohre 4 und damit die Längsträger 1 müssen demzufolge Biegebeanspruchungen aufnehmen. Um diese Biegebeanspruchungen auf niedrige Werte zu reduzieren, sind die Innenrohre 11 in Richtung zur Fahrzeugmitte über die Lagerhülsen 12a hinaus verlängert. Auf diese verlängerten Endstücke ist unter Zwischenschaltung jeweils einer Lagerbuchse 10 ein biegesteifes Rohr 17 aufgesetzt; hierdurch werden aus einer stärkeren Belastung einer Radaufhängung herrührende Biegebeanspruchungen über das Verbindungsrohr 17 auf die Lagerstelle der jeweils anderen Radaufhängung übertragen, so daß ein gewisser Ausgleich bei gleichzeitiger Lastreduzierung der stärker belasteten Lagerstelle stattfindet. Damit keine gegenseitige Beeinflußung der unabhängig voneinander wirkenden Radaufhängung auftritt, ist das Verbindungsrohr 17 frei drehbar auf den Endstücken der beiden Innenrohre 11 gelagert.

Das Ausführungsbeispiel in Fig. 1 zeigt weiterhin, daß einer der vier Verbindungsstäbe, nämlich der Verbindungsstab 15a durchgehend ausgeführt ist. Er verläuft auch innerhalb des Verbindungsrohres 17 und wirkt in ansich bekannter Weise als Stabilisator. Das voranstehend beschriebene Verbindungsrohr 17 bewirkt hierbei, daß dieser als Stabilisator wirkende Verbindungsstab 15a von Biegekräften freigehalten und demzufolge ausschließlich durch Torsionskräfte belastet wird. Ein weiterer Vorteil des durchgehenden Verbindungsstabes 15a ist darin zu sehen, daß er die gegenüber dem jeweiligen Achsführungsrohr 4 verdrehbaren Lagerelemente der beiden Längslenker 5 miteinander verbindet, so daß er gleichzeitig der spurweiten Fixierung dient und in Längsrichtung der Achse auftretende Kräfte aufnimmt.

Beim Ausführungsbeispiel ist zwischen jedem Längslenker 5 und dem zugehörigen Längsträger 1 des Fahrzeugrahmens ein Schwingungsdämpfer 18 angeordnet, dessen Befestigung am Längsträger 1 mittels einer Konsole 18a erfolgt. Außerdem zeigen die Zeichnungen ein am Längsträger 5 angreifendes Gestänge 19, daß der lastabhängigen Bremsansteuerung und einer Niveauregulierung dient, die abgeschaltet werden kann, wenn zwecks Absenkung des Fahrzeuges die Luftfedern 14 entlastet werden.

In den Fig. 2 und 3 ist die luftgefederte Kurbelachse in einer angehobenen Stellung, der Fahrstellung dargestellt. Es ist zu erkennen, daß der Fahrzeugrahmen annähernd parallel zur Fahrbahn ausgerichtet ist. Die Fig. 4 und 5 dagegen zeigen die gleiche luftgefederte Kurbelachse in einer abgesenkten Position, wie sie beispielsweise eingenommen wird, wenn das Fahrzeug be- oder entladen werden soll bzw. wenn das Fahrzeug abgestellt ist. In diesem Fall ist die Luftfeder 14 entlüftet, so daß die Federstütze 14d an der oberen Konsole 14c der Luftfeder 14 anliegt. Die Federstütze 14d verhindert in dieser abgesenkten Stellung, daß der Federbalg 14 beschädigt wird.

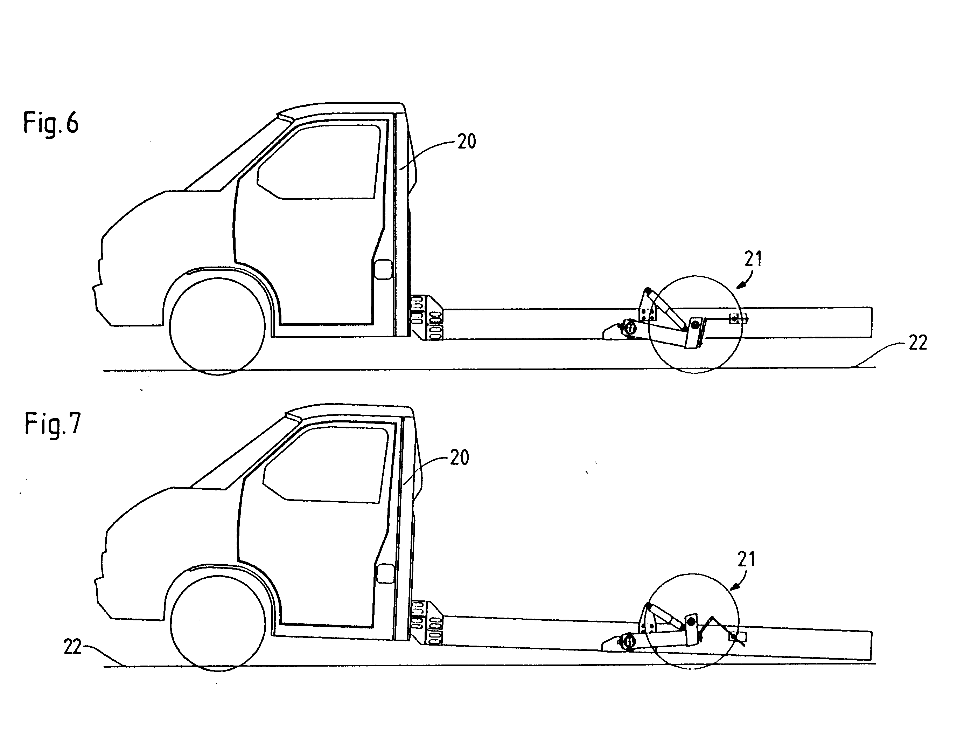

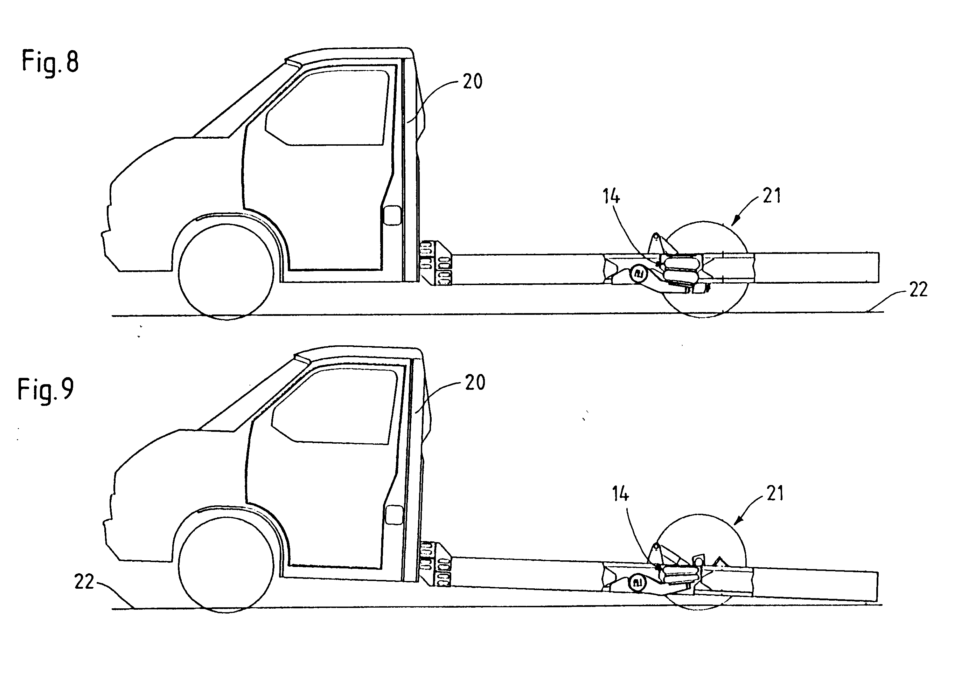

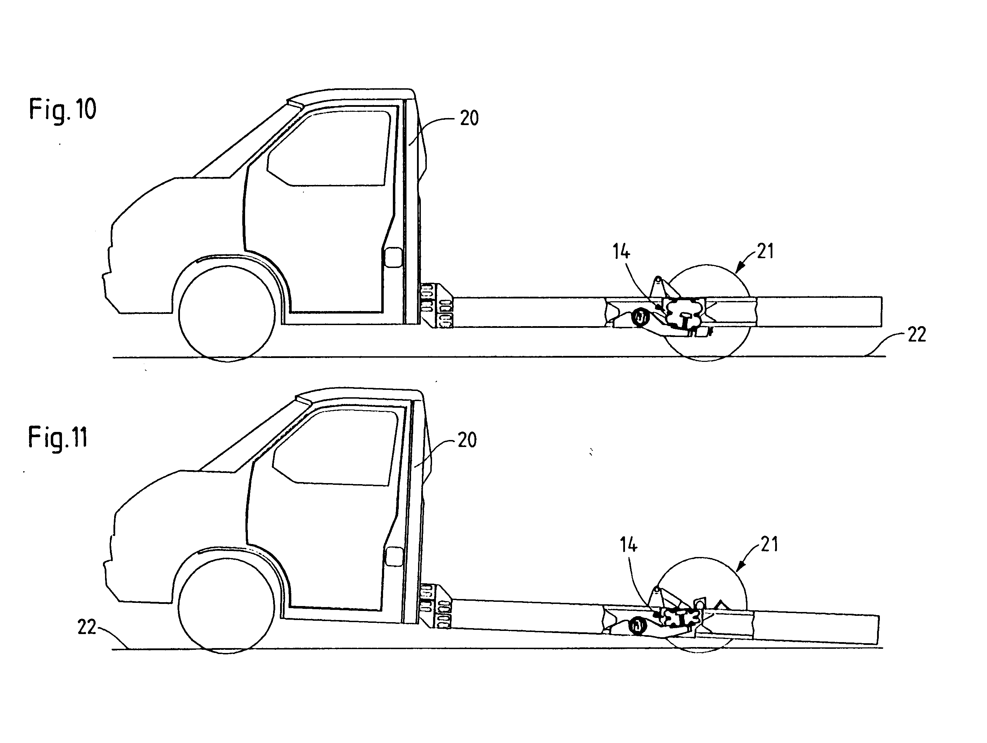

In den Fig. 6 bis 11 ist ein Kraftfahrzeug mit einem Führerhaus 20 und einem sich daran anschließenden Fahrzeugrahmen dargestellt, auf den verschiedene Aufbauten, wie beispielsweise eine Pritsche oder ein Kastenaufbau aufgesetzt werden können. Die Hinterachse 21 ist als luftgefederte Kurbelachse ausgeführt. Die Fig. 6, 8 und 10 zeigen das Kraftfahrzeug in der Fahrstellung, wobei die Luftfedern 14 belüftet sind, so daß der Fahrzeugrahmen annähernd parallel zur Fahrbahn 22 ausgerichtet ist.

Die Fig. 7, 9 und 11 zeigen das gleiche Fahrzeug, bei dem der hintere Teil des Fahrzeugrahmens durch entlüften der Luftfedern abgesenkt ist. In dieser Stellung des Fahrzeuges, in der das hintere Ende des Fahrzeugrahmens fast bis auf die Fahrbahn 22 abgesenkt ist, kann der in der Figuren nicht dargestellte Fahrzeugaufbau ohne eine Rampe bzw. Überfahrbrücke beladen werden. Insbesondere bei Fahrzeugen zum Transport von Krankenfahrstühlen oder dgl. können diese Krankenfahrstühle leicht in einen Kastenaufbau eingeschoben werden. Es ist aber auch möglich, bei einem derartigen Fahrzeug eine Aufbauwechselvorrichtung vorzusehen, so daß diese ohne Hilfe eines Kranes oder dgl. abgesetzt werden kann.

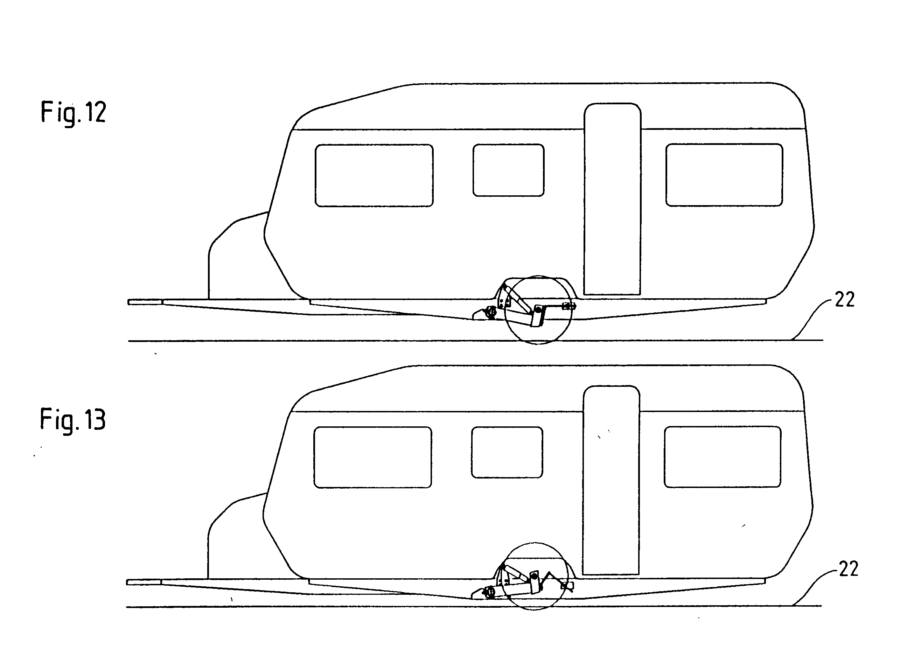

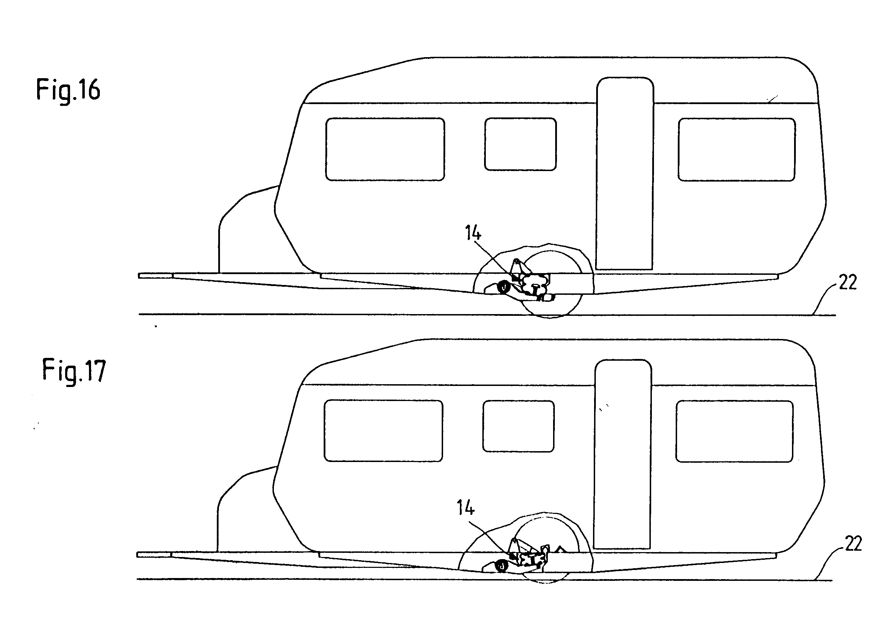

In den Fig. 12 bis 17 ist ein eine Zentralachse aufweisender Anhänger dargestellt. Diese Zentralachse ist als luftgefederte Kurbelachse ausgebildet.

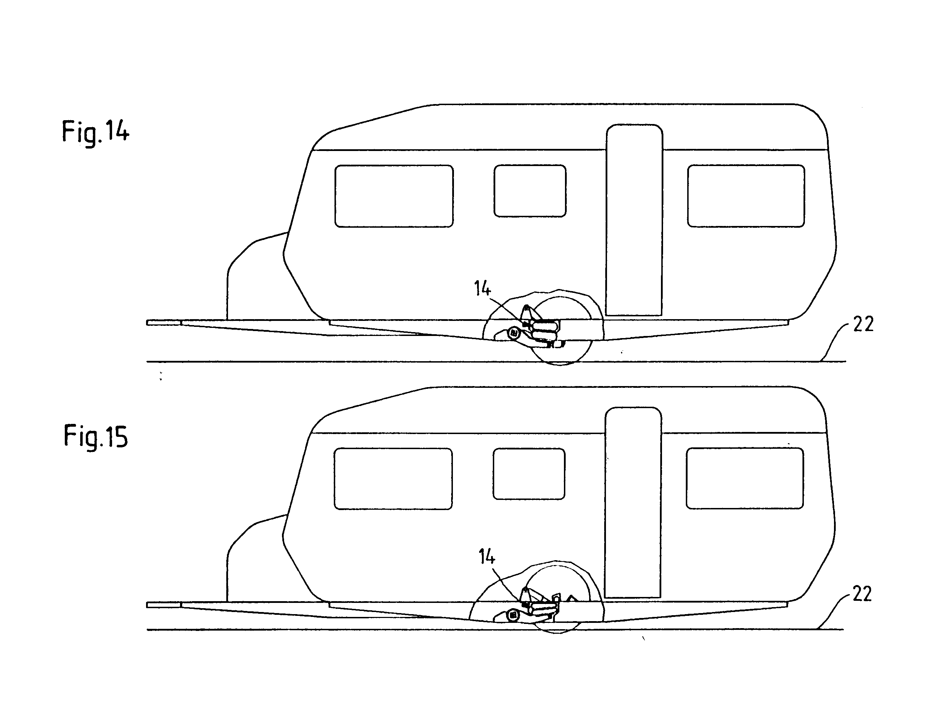

Die Fig. 12, 14 und 16 zeigen den Anhänger, der hier als Wohnanhänger dargestellt ist, in seiner Fahrstellung, wobei die Luftfedern 14 belüftet sind und der Anhängerrahmen einen ausreichenden Abstand von der Fahrbahn 22 hat, so daß er auch bei Unebenheiten nicht mit der Fahrbahn 22 in Kontakt kommen kann. Die Fig. 13, 15 und 17 zeigen den gleichen Wohnanhänger mit entlüfteten Luftfedern 14. In dieser Stellung ist der Anhängerrahmen fast bis auf die Fahrbahn 22 abgesenkt.

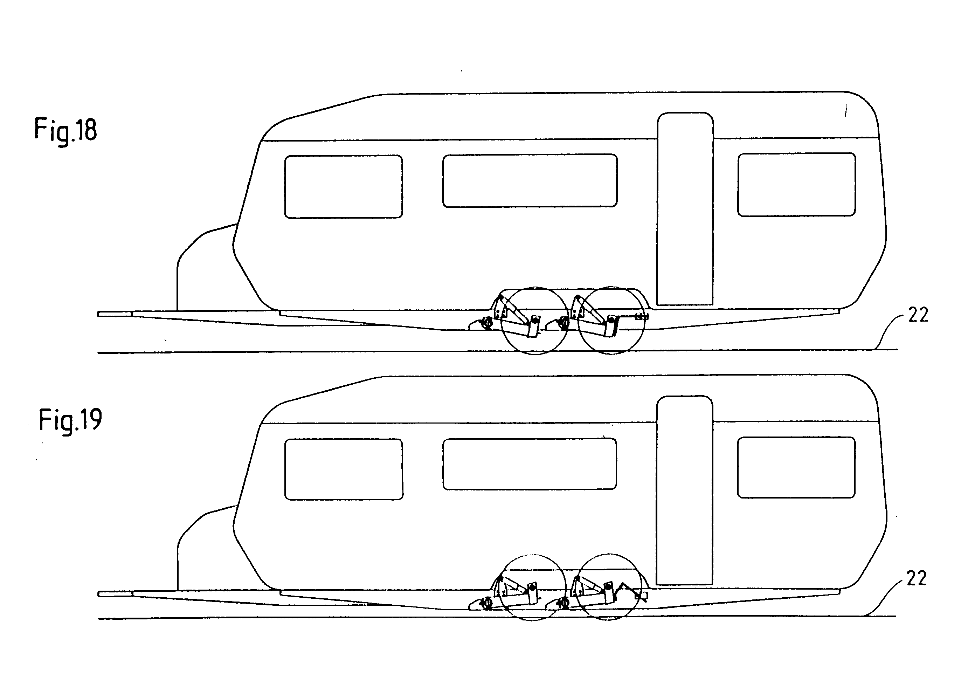

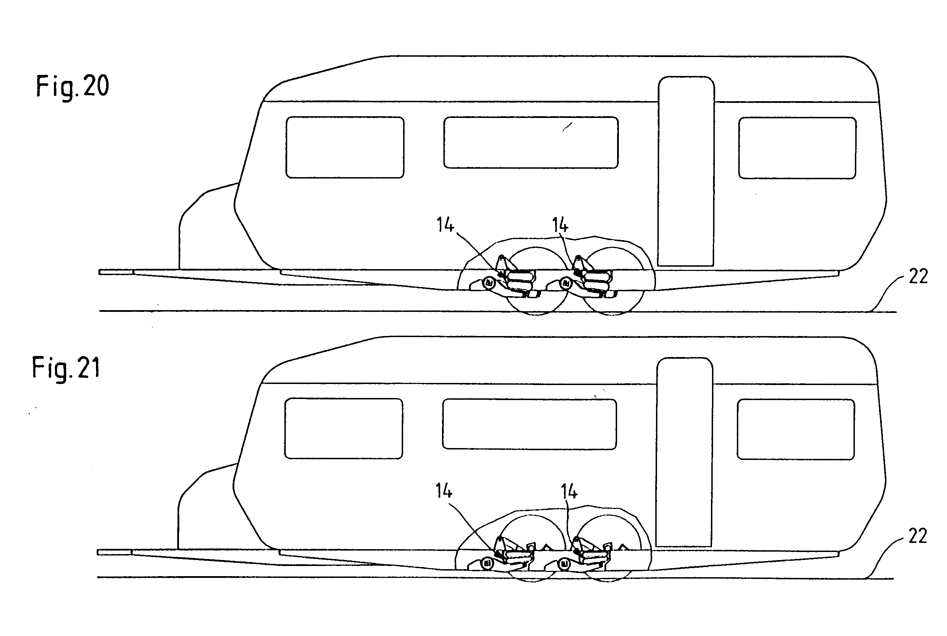

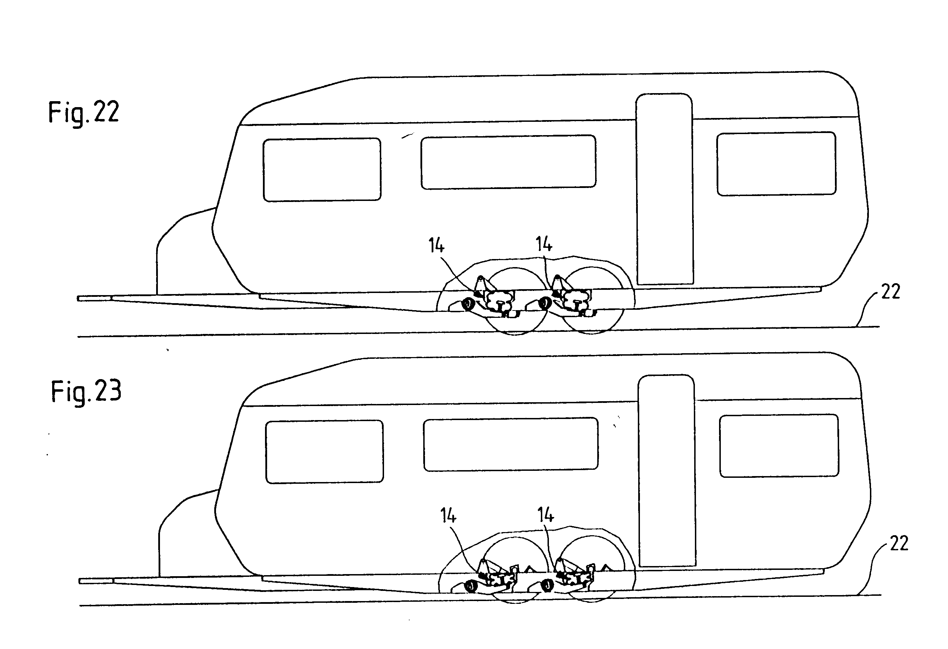

Die erfindungsgemäße luftgefederte Kurbelachse ist auch als Doppelachsaggregat einsetzbar, wie es beispielsweise in den Fig. 18 bis 23 am Beispiel eines doppelachsigen Wohnanhängers dargestellt ist. Auch hier zeigen die Fig. 18, 20 und 22 den Wohnanhänger mit der luftgefederten Kurbelachse in Fahrstellung und die Fig. 19, 21 und 23 in einer abgesenkten Stellung, wie sie beispielsweise beim Abstellen des Wohnanhängers auf Campingplätzen eingenommen wird.

Insbesondere aus den Fig. 6 bis 23 wird deutlich, daß die erfindungsgemäße luftgefederte Kurbelachse auch bei Fahrzeugen eingesetzt werden kann, die konstruktionsbedingt nur ein begrenztes Einbauvolumen für die Luftfederung bzw. für eine Absenkvorrichtung bieten. Dies ist vor allem bei den in den Fig. 6 bis 11 dargestellten Kleinlastkraftwagen und bei den in den Fig. 12 bis 23 dargestellten Wohnanhängern der Fall.

Beispielsweise können bei den Wohnanhängern die Luftfederbälge mit einem unterschiedlichen Druck beaufschlagt werden, so daß eine einseitige Beladung der Achse ausgeglichen wird und die Fahreigenschaften des Anhängers verbessert werden. Andererseits ist es mit der erfindungsgemäßen Kurbelachse möglich, den Anhänger soweit abzusenken, daß die Achse bzw. die Achsen im abgestellten Zustand entlastet werden, wenn der Wohnanhänger vorne und hinten abgestützt wird. Hierbei ist es vorteilhaft, daß der Anhänger soweit abgesenkt werden kann, daß relativ kurze Abstützungen verwendet werden können. Ferner wird durch das Absenken des gesamten Anhängerrahmens der Einstieg in den Anhänger erleichert.

Da Anhänger und zum Teil auch Kleinlastkraftwagen nicht über einen eigenen Kompressor verfügen ist vorgesehen, daß die Luftfedern über externe Ventile belüftet bzw. entlüftet werden können. Das Belüften bzw. Entlüften der Luftfedern kann beispielsweise an Tankstellen oder in Werkstätten erfolgen. Um dem Fahrer anzuzeigen, wann der richtige Luftdruck in den Luftfedern erreicht ist, kann am Rahmen oder am Federbalg eine Kennzeichnung angebracht sein, die dem Fahrer den richtigen Luftdruck in den Luftfedern anzeigt.

### Bezugszeichenliste

- 1: Längsträger
- 2: Querträger
- 3: Tragkonsole
- 4: Achsführungsrohr
- 5: Längslenker
- 6: Achsstummel
- 7: Nabe
- 8: Rad
- 9: Lagerstück
- 10: Lagerbuchse
- 11: Innenrohr
- 12a: Lagerhülse
- 12b: Lagerhülse
- 13: Tragarm
- 14: Luftfeder
- 14a: Luftfederbalg
- 14b: untere Konsole
- 14c: obere Konsole
- 14d: Federstütze
- 15: Verbindungsstab
- 15a: Verbindungsstab
- 16: Madenschrauben
- 17: Verbindungsrohr
- 18: Schwingungsdämpfer
- 18a: Konsole
- 19: Gestänge
- 20: Führerhaus
- 21: Hinterachse
- 22: Fahrbahn

## Patentansprüche

1. Luftgefederte Kurbelachse für Kraftfahrzeuge und Anhänger mit in an Längsträgern (1) des Fahrzeugrahmens angeordneten Achsführungsrohren (4) verschwenkbar gelagerten Längslenkern (5), an denen ein die Radnabe und Bremse tragender Achsstummel (6) angeordnet ist und die jeweils durch mindestens eine Luftfeder (14) gegenüber dem Fahrzeugrahmen abgestützt sind, wobei
die Längslenker (5) unabhängig voneinander verschwenkbar im jeweiligen Achsführungsrohr (4) gelagert und die Luftfederbälge (14a) der Luftfedern (14) gemeinsam zum Absenken des Fahrzeugrahmens entlüftbar sind,
die Luftfedern (14) zwischen den Längsträgern (1) des Fahrzeugrahmens angeordnet und mit einer Konsole (14b) jeweils an einem Tragarm (13) abgestützt sind, der verdrehbar im jeweiligen Achsführungsrohr (4) gelagert und unverdrehbar mit dem zugehörigen Längslenker (5) verbunden ist,
**dadurch gekennzeichnet,**
daß jeder Tragarm (13) über Lagerhülsen (12a,12b) mit dem zugehörigen Längslenker (5) verbunden ist,
daß die jeweiligen Lagerhülsen (12a,12b) mit im Achsführungsrohr (4) gelagerten Innenrohren (11) verbunden sind,
daß die Innenrohre (11) die jeweiligen Lagerhülsen (12a,12b) zur Mitte des Fahrzeugrahmens überragen, und
daß auf den dadurch gebildeten Endstücken der Innenrohre (11) ein Verbindungsrohr (17) frei drehbar gelagert ist.

2. Kurbelachse nach Anspruch 1, dadurch gekennzeichnet, daß zwischen Achsführungsrohr (4) und Innenrohr (11) Lagerbuchsen (10) angeordnet sind.

3. Kurbelachse nach Anspruch 1, dadurch gekennzeichnet, daß die Lagerhülsen (12a,12b) jedes Tragarmes (13) über mindestens einen Verbindungsstab (15) formschlüssig mit einem am Längslenker (5) angeordneten Lagerstück (9) verbunden ist.

4. Kurbelachse nach Anspruch 3, dadurch gekennzeichnet, daß mindestens ein Verbindungsstab (15a) zur Verbindung der beiden Radaufhängungen durchgehend als Stabilisator ausgebildet ist.

5. Kurbelachse nach den Ansprüchen 1 bis 4, dadurch gekennzeichnet, daß die Lagerhülsen (12a,12b) und die Lagerstücke (9) jeweils über eine Madenschraube (16) in Achslängsrichtung mit dem durchgehenden Verbindungsstab (15a) verbunden sind.

6. Kurbelachse nach mindestens einem der Ansprüche 1 bis 5, dadurch gekennzeichnet, daß zwischen der Radaufhängung und dem Fahrzeugrahmen ein Schwingungsdämpfer (18) angeordnet ist.

7. Kurbelachse nach mindestens einem der Ansprüche 1 bis 6, dadurch gekennzeichnet, daß die Luftfedern (14) mit einer zum Heben und Senken abschaltbaren Niveauregulierung ausgerüstet und als Sensor zur lastabhängigen Bremsansteuerung ausgebildet sind.

## Claims

1. An air-suspended crank axle for motor vehicles and trailers, with the provision of trailing links (5) pivotally mounted in axle guide tubes (4) disposed on longitudinal members (1) of the vehicle chassis, a stub axle (6) which carries the wheel hub and the brake being disposed on the trailing links (5), each of which bears by way of at least one air bag (14) on the vehicle chassis,
the trailing links (5) being so mounted in the respective axle guide tube (4) as to be pivotable independently of one another, the air bag bellows (14a) being adapted to be vented together in order to lower the vehicle chassis,
the air bags (14) being disposed between the chassis longitudinal members (1) and each bearing by way of a bracket (14b) on a carrying arm (13) which is rotatably mounted in the respective axle guide tube (4) and which is non-rotatably connected to the associated trailing link (5),
characterised in that
each carrying arm (13) is connected by way of bearing sleeves (12a, 12b) to the associated trailing link (5),
the bearing sleeves (12a, 12b) are connected to respective inner tubes (11) disposed in the axle guide tube (4),
the inner tubes (11) project beyond the respective bearing sleeves (12a, 12b) towards the centre of the vehicle chassis, and
a connecting tube (17) is so mounted as to rotate freely on the resulting end parts of the inner tubes (11).

2. A crank axle according to claim 1, characterised in that bearing sleeves (10) are disposed between the axle guide tube (4) and the inner tube (11).

3. A crank axle according to claim 1, characterised in that the bearing sleeves (12a, 12b) of each carrying arm (13) are positively connected by way of at least one connecting rod (15) to a bearing member (9) on the trailing link (5).

4. A crank axle according to claim 3, characterised in that at least one connecting rod (15a) for interconnecting the two wheel suspensions is devised throughout as a stabiliser.

5. A crank axle according to claims 1 to 4, characterised in that the bearing sleeves (12a, 12b) . and the bearing elements (9) are each connected by way of a grub screw (16) lengthwise of the axle to the continuous connecting rod (15a).

6. A crank axle according to at least one of claims 1 to 5, characterised in that a vibration damper (18) is disposed between the wheel suspension and the vehicle chassis.

7. A crank axle according to at least one of claims 1 to 6, characterised in that the air bags (14) have a level control facility adapted to be shut off for raising and lowering and are devised as a sensor for triggering load-dependent braking.

## Revendications

1. Essieu à bras tirés et suspension pneumatique, destiné à des véhicules automobiles et à des remorques, et comportant des bras oscillants longitudinaux (5) qui sont montés de manière pivotante dans des tubes de guidage d'essieu (4) disposés sur des longerons (1) du châssis du véhicule, sont équipés d'une fusée d'essieu (6) portant le moyeu de roue et le frein, et s'appuient chacun par l'intermédiaire d'au moins un ressort pneumatique (14), sur le châssis du véhicule, les bras oscillants longitudinaux (5) étant montés dans le tube de guidage d'essieu correspondant (4) de manière à pouvoir pivoter indépendamment l'un de l'autre, les soufflets pneumatiques (14a) des ressorts pneumatiques (14) pouvant être purgés en commun en vue d'abaisser le châssis du véhicule, et les ressorts pneumatiques (14) étant disposés entre les longerons (1) du châssis du véhicule en s'appuyant chacun par une console (14b) sur un bras de support (13) qui est monté de manière tournante dans le tube de guidage d'essieu (4) correspondant et relié par une liaison fixe en rotation au bras oscillant longitudinal (5) correspondant, caractérisé en ce que chaque bras de support (13) est relié par l'intermédiaire de douilles de palier (12a, 12b) au bras oscillant longitudinal (5) correspondant, en ce que les douilles de palier respectives (12a, 12b) sont reliées à des tubes intérieurs (11) montés dans le tube de guidage d'essieu (4), en ce que les tubes intérieurs (11) dépassent des douilles de palier respectives (12a, 12b) en direction du centre du châssis du véhicule, et en ce que sur les pièces d'extrémité des tubes intérieurs (11), ainsi formées, est monté librement tournant, un tube de liaison (17).

2. Essieu à bras tirés selon la revendication 1, caractérisé en ce qu'entre le tube de guidage d'essieu (4) et le tube intérieur (11), sont disposées des douilles de palier (10).

3. Essieu à bras tirés selon la revendication 1, caractérisé en ce que les douilles de palier (12a, 12b) de chaque bras de support (13) sont reliées par complémentarité de forme, par l'intermédiaire d'au moins une barre de liaison (15), à une pièce de palier (9) disposée sur le bras oscillant longitudinal (5).

4. Essieu à bras tirés selon la revendication 3, caractérisé en ce qu'au moins une barre de liaison (15a) est réalisée en continu, en tant que stabilisateur, de manière à relier les deux suspensions de roues.

5. Essieu à bras tirés selon les revendications 1 à 4, caractérisé en ce que les douilles de palier (12a, 12b) et les pièces de palier (9) sont chacune liées dans la direction longitudinale de l'essieu, à la barre de liaison continue (15a), par l'intermédiaire d'une vis sans tête (16).

6. Essieu à bras tirés selon l'une au moins des revendications 1 à 5, caractérisé en ce qu'entre la suspension de roue et le châssis du véhicule, est disposé un amortisseur (18).

7. Essieu à bras tirés selon l'une au moins des revendications 1 à 6, caractérisé en ce que les ressorts pneumatiques (14) sont équipés d'une régulation de niveau susceptible d'être mise hors service pour le soulèvement et l'abaissement, et sont réalisés en tant que détecteur pour la commande de freinage en fonction de la charge.
